# EUROPEAN PATENT SPECIFICATION

(11) **EP 3 772 615 B1**
(45) Date of publication and mention of the grant of the patent: **20.03.2024**
(21) Application number: 19190692.4
(22) Date of filing: 08.08.2019
(51) Int. Cl.: F23R 3/26, F02C 9/18, F23R 3/34

(54) **SEQUENTIAL COMBUSTOR ASSEMBLY FOR A GAS TURBINE ASSEMBLY AND METHOD FOR OPERATING SAID SEQUENTIAL COMBUSTOR ASSEMBLY**
SEQUENZIELLE BRENNKAMMERANORDNUNG FÜR EINE GASTURBINENANORDNUNG UND VERFAHREN ZUM BETREIBEN DIESER SEQUENTIELLEN BRENNKAMMERANORDNUNG
ENSEMBLE DE CHAMBRE DE COMBUSTION SÉQUENTIELLE POUR UN ENSEMBLE DE TURBINES À GAZ ET PROCÉDÉ DE FONCTIONNEMENT DUDIT ENSEMBLE DE CHAMBRE DE COMBUSTION SÉQUENTIELLE

(43) Date of publication of application: 10.02.2021
(73) Proprietor: Ansaldo Energia Switzerland AG, 5400 Baden (CH)
(72) Inventor: CIANI, Andrea, 8057 ZURICH (CH); FRUECHTEL, Gerhard, 5412 GEBENSTORF (CH); BOTHIEN, Mirko Ruben, 8037 ZURICH (CH); PENNELL, Douglas, 5210 WINDISCH (CH)
(74) Representative: Studio Torta S.p.A.

(56) References cited:
- EP-A1- 2 287 456
- EP-A1- 2 767 699
- EP-A1- 3 376 003
- EP-A2- 2 650 511
- US-A1- 2015 101 340
- US-A1- 2015 101 341

## Description

### Field of the Invention

The present invention relates to a sequential combustor assembly for a gas turbine assembly and to a method for operating said sequential combustor assembly.

The method for operating a sequential combustor for a gas turbine according to the invention is particularly useful when the above sequential combustor assembly is fed with a high reactive fuel, for instance a fuel comprising hydrogen.

### Background

As known, a gas turbine assembly for a power plant for the production of electrical energy comprises a compressor, a combustor assembly and at least one turbine.

In particular, the compressor is supplied with air and comprises a plurality of blades compressing the supplied air. The compressed air leaving the compressor flows into a plenum, i.e. a closed volume delimited by an outer casing, and from there into the combustor assembly. In the combustor assembly the compressed air and at least one fuel are combusted.

The resulting hot gas leaves the combustor assembly and is expanded in the turbine performing work.

In order to achieve a high efficiency, high temperatures are required during combustion. However, due to these high temperatures, high NOx emissions are generated.

In order to reduce these emissions and to increase operational flexibility, sequential combustor assemblies can be used.

In general, a sequential combustor assembly comprises two combustors in series: a first-stage combustor and a second-stage combustor, which is arranged downstream the first-stage combustor along the gas flow and is fed with the hot gas leaving the first-stage combustor.

Two different kinds of sequential combustor assemblies are mainly known: annular type and can type.

In the annular combustor assemblies, the first-stage combustor and the second-stage combustor are annular shaped and are physically separated by a stage of turbine blades, called high-pressure turbine.

In the can type, the combustor assembly comprises a plurality of can-shaped casings, each of which comprises a first-stage combustor and a second-stage combustor arranged one downstream the other inside the common can-shaped casing. Preferably, a mixer is arranged between the first-stage combustor and the second-stage combustor.

In both embodiments, the first-stage combustor and the second-stage combustor are supplied with fuel.

Starting from the above mentioned structures of sequential gas turbines, today the need of improving the fuel flexibility is present. However, the change of the kind of fuel should be made considering that emissions should be kept under the limits and that the power plant should maintain high performance.

In particular, one of the most important challenges is to use high reactive fuels, e.g. with high amounts of hydrogen (H₂) or higher hydrocarbons (e.g. ethane, propane).

At the same time, the composition of natural gas considered for use within gas turbines is becoming significantly more variable due to increased use of liquefied natural gas and a wider range of gas sources and extraction methods.

Moreover, also fuels having very low calorific values and coming from waste processes or biomass gasification are increasingly of interest.

Fuel flexibility is therefore of utmost importance in modern gas turbine development.

A change in fuel reactivity implies a change in flame location. In particular, higher fuel reactivity (like hydrogen based fuels) forces the flame to move upstream, increasing NOx emissions, and potentially overheating the burners, while lower fuel reactivity results in the opposite and pushes the flame downstream, increasing CO and unburned hydrocarbons emissions due to the insufficient burnout time.

Consequently, when burning highly reactive fuels (e.g. fuels containing large quantities of either higher hydrocarbons or hydrogen) the flame moves upstream compared to the case of natural gas, thus increasing the risk of flashback. While when burning low reactive fuels the flame moves downstream, increasing CO and unburned hydrocarbons emissions.

The position of the flame in the second-stage combustor can be controlled by the temperature at the inlet of the second-stage combustor (self/spontaneous ignition). By lowering/increasing the inlet temperature it is therefore possible to move the flame downstream/upstream.

With a fixed air distribution, the change of the first stage flame temperature and/or the second stage inlet temperature could be limited.

In such case fuels with particularly high or low reactivity could not be used, because of a too narrow operating window either because of emissions or burner local temperatures.

A sequential combustor assembly and its method of operation are described by US2015/101341.

### Summary

It is therefore an object of the present invention to provide a sequential combustor assembly, which enables avoiding or at least mitigating the described drawbacks.

In particular, it is an object of the present invention to provide a sequential combustor assembly configured to allow a reliable control of the temperature at the inlet of the second stage combustor.

According to the present invention, there is provided a sequential combustor assembly comprising:
- a first-stage combustor comprising at least one first burner fed with at least one first fuel and configured to generate, in use, at least one first flame;
- a second-stage combustor arranged downstream the first-stage combustor and fed by the hot gas leaving the first-stage combustor; the second-stage combustor comprising at least one second burner fed with at least one second fuel and being configured to generate, in use, a second flame;
- an air supply circuit comprising:
   - a first line configured to supply air to the at least one first burner of the first-stage combustor;
   - a second line configured to supply air downstream the at least one first flame and upstream the second-stage combustor;
   - an adjusting device configured to adjust a first air flow rate in the first line and a second air flow rate in the second line so as to control the ratio between the first air flow rate and the second air flow rate.

In this way the fuel fed to the combustor assembly can be changed significantly broadening the operation window and further extending the fuel reactivity acceptable range.

According to the present invention, the combustor assembly comprises a control device configured to set a desired ratio between the first air flow rate and the second air flow rate on the basis of the kind of first fuel and second fuel and on the basis of the operating conditions of the sequential combustor assembly.

In this way, the fuel composition can be changed without any risks as the control device is able to adjust the ratio even in real time.

According to the present invention, the control device is configured to set a desired ratio between the first air flow rate and the second air flow rate so as to obtain a desired temperature of the gas at the inlet of the second-stage combustor.

In this way the flame position in the second-stage combustor is reliably controlled.

According to an embodiment of the present invention, the second line supplies air into a mixer arranged between the first-stage combustor and the second-stage combustor.

According to an embodiment of the present invention, the second line supplies air into a high pressure turbine arranged between the first-stage combustor and the second-stage combustor.

According to an embodiment of the present invention, the adjusting device comprises a first regulating valve on the first line.

According to an embodiment of the present invention, the adjusting device comprises a second regulating valve on the second line.

According to an embodiment of the present invention, the adjusting device comprises a three-way valve configured to adjust the first air flow rate in the first line and the second air flow rate in the second line.

According to an embodiment of the present invention, the adjusting device comprises a by-pass line and a by-pass valve on the by-pass line; the by-pass line being arranged in parallel to the first line and/or to the second line.

It is another object of the present invention to provide a method for operating a sequential combustor assembly which allows a reliable control of the temperature at the inlet of the second stage combustor.

According to the present invention, there is provided a method for operating a sequential combustor assembly for a gas turbine assembly comprising:
providing a sequential combustor assembly comprising:
   - a first-stage combustor comprising at least one first burner;
   - a second-stage combustor arranged downstream the first-stage combustor and comprising at least one second burner; the second-stage combustor and the first-stage combustor being connected so as the second-stage combustor is fed by the hot gas leaving the first-stage combustor;
supplying at least one first fuel to the at least one first burner so as to generate at least one first flame;
supplying at least one second fuel to the at least one second burner so as to generate at least one second flame;
supplying a first air flow rate to the at least one first burner;
supplying a second air flow rate downstream the at least one first flame and upstream the second-stage combustor;
adjusting the first air flow rate and the second air flow rate so as to control the ratio between the first air flow rate and the second air flow rate.

According to the present invention, the method comprises setting a desired ratio between the first air flow rate and the second air flow rate on the basis of the kind of first fuel and second fuel and on the basis of the operating conditions of the sequential combustor assembly.

According to the present invention, the setting is made to obtain a desired temperature of the gas at the inlet of the second-stage combustor.

According to an embodiment of the present invention, the first fuel and the second fuel are highly reactive fuels.

According to an embodiment of the present invention, the first fuel and the second fuel are low reactive fuels.

### Brief description of the drawings

The present invention will now be described with reference to the accompanying drawings, which illustrate some non-limiting embodiments, in which:
- Figure 1 is a schematic representation of a gas turbine assembly;
- Figure 2 is a lateral schematic view with parts in section and parts removed for clarity, of a combustor assembly according to the present invention;
- Figure 3 is a lateral schematic view with parts in section and parts removed for clarity, of a detail of the combustor assembly according to a first embodiment of the present invention;
- Figure 4 is a lateral schematic view with parts in section and parts removed for clarity, of a detail of combustor assembly according to a second embodiment of the present invention;
- Figure 5 is a lateral schematic view with parts in section and parts removed for clarity, of a detail of a combustor assembly according to a third embodiment of the present invention;
- Figure 6 is a lateral schematic view with parts in section and parts removed for clarity, of a detail of a combustor assembly according to a fourth embodiment of the present invention.

### Detailed description of exemplary embodiments

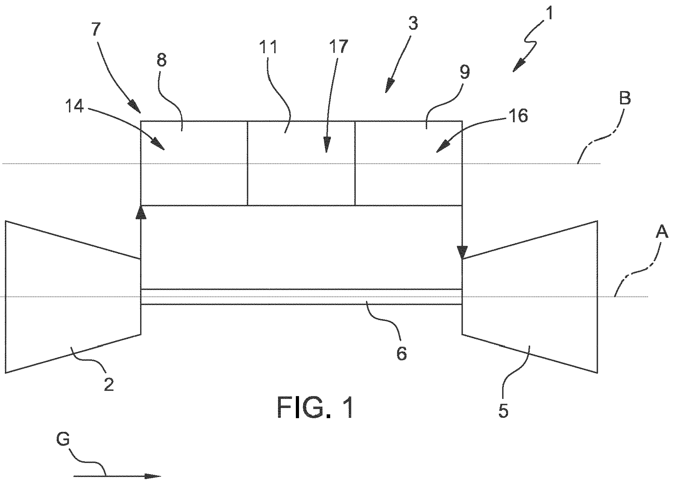

In figure 1 reference numeral 1 indicates a gas turbine assembly. The gas turbine assembly 1 comprises a compressor 2, a sequential combustor assembly 3 and a turbine 5. The compressor 2 and the turbine 5 extend along a main axis A.

In use, an airflow compressed in the compressor 2 is mixed with fuel and is burned in the sequential combustor assembly 3. The burned mixture is then expanded in the turbine 5 and converted in mechanical power by a shaft 6, which is connected to an alternator (not shown).

In the non-limiting example here disclosed and illustrated, the sequential combustor assembly 3 is of the can-type and comprises a plurality of cans 7(only one being represented in figure 1). Each can 7 extends along a main axis B and comprises a first-stage combustor 8 and a second-stage combustor 9 sequentially arranged along the gas flow direction G. In other words, the second-stage combustor 9 is arranged downstream the first-stage combustor 8 along the gas flow direction G.

Preferably, between the first stage combustor 8 and the second stage combustor 9 a mixer 11 is arranged.

The first stage combustor 8 defines a first combustion chamber 14, the second stage combustor 9 defines a second combustion chamber 16, while the mixer 11 defines a mixing chamber 17.

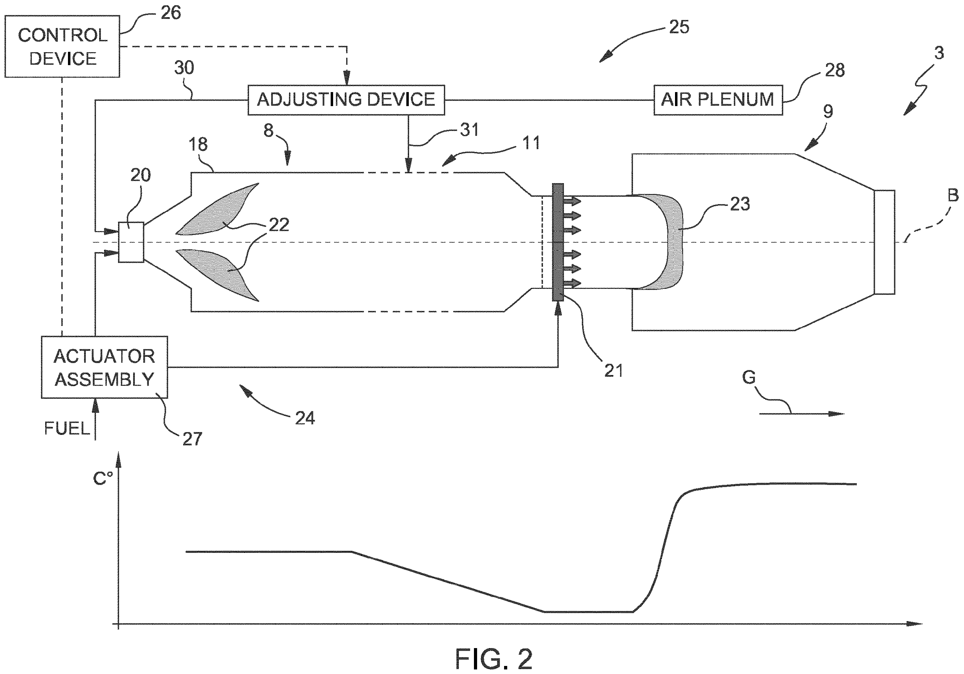

The first combustion chamber 14, the second combustion chamber 16 and the mixing chamber 17 are in fluid-communication and are defined by a liner 18 (see figure 2) which extends along the longitudinal axis B.

With reference to figure 2, the first-stage combustor 8 comprises at least one first burner 20 and the second-stage combustor 9 comprises at least one second burner 21.

In the non-limiting example here disclosed and illustrated, the first stage combustor 8 comprises a plurality of first burners 20 (schematically represented by a box) and the second stage combustor comprises a plurality of second burners 21 (schematically represented by a box).

In use the first burners 20 generate a first flame represented schematically by areas having reference 22 and the second burners 21 generate a second flame represented schematically by areas having reference 23.

The sequential combustor assembly 3 also comprises a fuel supply circuit 24 and an air supply circuit 25 and a control device 26.

The fuel supply circuit 24 is configured to supply at least one first fuel to the first burners 20 and at least one second fuel to the second burners 21 and comprises an actuator assembly 27 (schematically represented) configured to regulate the amount of fuel supplied to the first burners 20 and to the second burners 21 under the control of the control device 26.

In the non-limiting example here disclosed and illustrated the first fuel and the second fuel are identical.

The air supply circuit 25 is connected to an air plenum 28 (schematically represented in figure 2) and comprises a first line 30 configured to supply air to the at least one first burner 20 of the first stage combustor 8, a second line 31 configured to supply air downstream the at least one first flame 22 and upstream the second stage combustor 9 and an adjusting device 33 configured to adjust a first air flow rate in the first line 30 and a second air flow rate in the second line 31 under the control of the control device 26.

Preferably, the second line 31 is configured to supply air to the mixer 11.

According to a variant (not illustrated), the second line 31 supplies air to a high pressure turbine arranged upstream the second stage combustor 9.

In particular, the control device 26 regulates the adjusting device 33 to control the air ratio between the first air flow rate and the second air flow rate. The air ratio is controlled so as the hot gas at the inlet of the second stage combustor 9 has a desired temperature.

In other words, the control device 26 sets a desired air ratio so as to obtain a desired temperature of the gas at the inlet of the second-stage combustor 9 and the adjusting device 33 adjusts the first air flow rate and the second air flow rate so as to obtain the desired air ratio. The control device 26 is configured to set the desired ratio between the first air flow rate and the second air flow rate on the basis of the kind of fuel used in the first burners 20 and in the second burners 21 and on the basis of the operating conditions of the sequential combustor assembly 3.

In the lower part of figure 2 is reported a diagram disclosing how the temperature of the gas flow varies along the axial direction when the sequential combustor assembly 3 is operating.

In the example illustrated in figure 2 the fuel supplied to the first burners 20 and to the second burners 21 is a highly-reactive fuel (for example a hydrogen based fuel). In case of highly reactive fuels, the temperature at the inlet of the second stage combustor 9 should be as low as possible in order to move the second flame 23 downstream and avoid a flame flashbacks in the second burners 21.

In case the fuel supplied to the first burners 20 and to the second burners 21 is a low reactive fuel, the temperature at the inlet of the second stage combustor 9 should be regulated so as to move the second flame 23 upstream, avoiding an increase of CO and unburned hydrocarbons emissions.

In other words, the control device 26 is configured to define, for each fuel type, a desired air ratio between the first air flow rate and the second air flow rate so as to obtain the proper temperature at the inlet of the second burner 26. On the basis of the desired air ratio the adjusting device 33 regulates the first air flow rate and the second air flow rate.

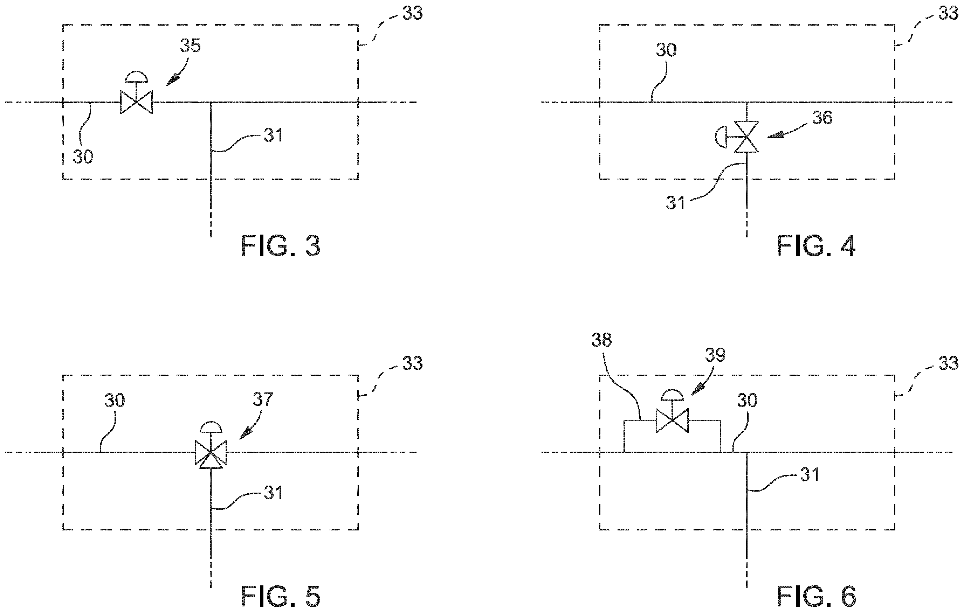

In figure 3 a first embodiment of the adjusting device 33 is represented.

The adjusting device 33 comprises a first regulating valve 35 arranged along the first line 30.

The first regulating valve 35 is controlled by the control device 26.

The amount of air coming from the air plenum 28 depends on the operating conditions of the turbine assembly 1 and is known. Therefore adjusting the first regulating valve 35 implies a regulation of the air flow rate also in the second line 31.

According to a variant not shown, a restriction can be arranged along the second line 31 to set a desired flow rate in the second line 31.

In figure 4 a second embodiment of the adjusting device 33 is represented.

The adjusting device 33 comprises a second regulating valve 36 arranged along the second line 30.

The second regulating valve 36 is controlled by the control device 26.

The amount of air coming from the air plenum 28 depends on the operating conditions of the turbine assembly 1 and is known. Therefore adjusting the second regulating valve 36 implies a regulation of the air flow rate also in the first line 30.

According to a variant not shown, a restriction can be arranged along the first line 30 to set a desired flow rate in the first line 30.

In figure 5 a third embodiment of the adjusting device 33 is represented.

The adjusting device 33 comprises a three-way valve 37 arranged at the connection between the first line 30 and the second line 31. The three-way valve 37 is controlled by the control device 26 and regulates the first air flow rate in the first line 30 and the second air flow rate in the second line 31.

In figure 6 a fourth embodiment of the adjusting device 33 is represented.

The adjusting device 33 comprises a by-pass line 38 and a by-pass valve 39 arranged along the by-pass line 38. The by-pass line 38 is arranged in parallel to the first line 30.

The by-pass valve 39 is controlled by the control device 26.

The amount of air coming from the air plenum 28 depends on the operating conditions of the turbine assembly 1 and is known. Therefore adjusting the by-pass valve 39 implies a regulation of the air flow rate also in the first line 30 and in the second line 31.

Such an embodiment is particularly suitable for applications on already existing gas turbine assemblies. The addition of a by-pass line, in fact, minimizes the structural changes to the already existing combustor assembly.

According to a variant not shown, the by-pass line 38 is arranged in parallel to the second line 31.

According to variants not shown, a restriction can be arranged along the first line 30 and/or along the second line 31 to set a desired flow rate in the first line 30 and/or in the second line 31.

Finally, it is clear that modifications and variants can be made to the combustor assembly and to the method described herein without departing from the scope of the present invention, as defined in the appended claims.

## Claims

1. Sequential combustor assembly comprising:
• a first-stage combustor (8) comprising at least one first burner (20) fed with at least one first fuel and configured to generate, in use, at least one first flame (22);
• a second-stage combustor (9) arranged downstream the first-stage combustor (8) and fed by the hot gas leaving the first-stage combustor (8); the second-stage combustor (9) comprising at least one second burner (21) fed with at least one second fuel and being configured to generate, in use, a second flame (23);
• an air supply circuit (25) comprising:
- a first line (30) configured to supply air to the at least one first burner (20) of the first-stage combustor (8);
- a second line (31) configured to supply air downstream the at least one first flame (22) and upstream the second-stage combustor (9);
- an adjusting device (33) configured to adjust a first air flow rate in the first line (30) and a second air flow rate in the second line (31) so as to control the ratio between the first air flow rate and the second air flow rate and obtain a desired air ratio;
the combustor being **characterized by** comprising a control device (26) configured to set the desired ratio between the first air flow rate and the second air flow rate so as to obtain a desired temperature of the gas at the inlet of the second-stage combustor (9) on the basis of the kind of first fuel and second fuel and on the basis of the operating conditions of the sequential combustor assembly (3).

2. Sequential combustor according to claim 1, wherein the second line (31) supplies air into a mixer (11) arranged between the first-stage combustor (8) and the second-stage combustor (9).

3. Sequential combustor according to claim 1, wherein the second line (31) supplies air into a high pressure turbine arranged between the first-stage combustor (8) and the second-stage combustor (9).

4. Sequential combustor according to anyone of the foregoing claims, wherein the adjusting device (33) comprises a first regulating valve (35) on the first line (30).

5. Sequential combustor according to anyone of the foregoing claims, wherein the adjusting device (33) comprises a second regulating valve (36) on the second line (31).

6. Sequential combustor according to anyone of claims from 1 to 3, wherein the adjusting device (33) comprises a three-way valve (37) configured to adjust the first air flow rate in the first line (30) and the second air flow rate in the second line (31).

7. Sequential combustor according to anyone of claims from 1 to 3, wherein the adjusting device (33) comprises a by-pass line (38) and a by-pass valve (39) on the by-pass line (38); the by-pass line (38) being arranged in parallel to the first line (30) and/or to the second line (31).

8. Gas turbine assembly comprising a compressor (2), a turbine (5) and a sequential combustor assembly (3) as claimed in anyone of the foregoing claims.

9. Method for operating a sequential combustor assembly (3) for a gas turbine assembly comprising:
providing a sequential combustor assembly (3) comprising:
▪ a first-stage combustor (8) comprising at least one first burner (20);
▪ a second-stage combustor (9) arranged downstream the first-stage combustor (8) and comprising at least one second burner (21); the second-stage combustor (9) and the first-stage combustor (8) being connected so as the second-stage combustor (9) is fed by the hot gas leaving the first-stage combustor (8) ;
supplying at least one first fuel to the at least one first burner (20) so as to generate at least one first flame (22);
supplying at least one second fuel to the at least one second burner (21) so as to generate at least one second flame (23);
supplying a first air flow rate to the at least one first burner (20);
supplying a second air flow rate downstream the at least one first flame (22) and upstream the second-stage combustor (9);
adjusting the first air flow rate and the second air flow rate so as to control the ratio between the first air flow rate and the second air flow rate and obtain a desired air ratio; the method being **characterized by** further comprising setting the desired ratio between the first air flow rate and the second air flow rate so as to obtain a desired temperature of the gas at the inlet of the second-stage combustor (9); wherein the setting is made on the basis of the kind of first fuel and second fuel and on the basis of the operating conditions of the sequential combustor assembly (3).

10. Method according to claim 9, wherein the first fuel and the second fuel are high reactive fuels.

11. Method according to claim 9 or 10, wherein the first fuel and the second fuel are low reactive fuels.

## Patentansprüche

1. Sequentielle Brennerkammeranordnung, umfassend:
• eine Erststufen-Brennkammer (8), die mindestens einen ersten Brenner (20) umfasst, der mit mindestens einem ersten Brennstoff gespeist wird und dazu ausgelegt ist, in der Verwendung mindestens eine erste Flamme (22) zu erzeugen;
• eine Zweitstufen-Brennkammer (9), die stromabwärts von der Erststufen-Brennkammer (8) angeordnet ist und mit dem heißen Gas gespeist wird, das der Erststufen-Brennkammer (8) entströmt; wobei die Zweitstufen-Brennkammer (9) mindestens einen zweiten Brenner (21) umfasst, der mit mindestens einem zweiten Brennstoff gespeist wird und dazu ausgelegt ist, in der Verwendung eine zweite Flamme (23) zu erzeugen;
• einen Luftzufuhrkreislauf (25), umfassend:
- eine erste Leitung (30), die dazu ausgelegt ist, an den mindestens einen ersten Brenner (20) der Erststufen-Brennkammer (8) Luft zu liefern;
- eine zweite Leitung (31), die dazu ausgelegt ist, stromabwärts von der mindestens einen ersten Flamme (22) und stromaufwärts von der Zweitstufen-Brennkammer (9) Luft zu liefern;
- eine Einstellvorrichtung (33), die dazu ausgelegt ist, eine erste Luftströmungsrate in der ersten Leitung (30) und eine zweite Luftströmungsrate in der zweiten Leitung (31) einzustellen, um so das Verhältnis zwischen der ersten Luftströmungsrate und der zweiten Luftströmungsrate einzustellen und einen gewünschten Luftanteil zu erhalten;
wobei die Brennkammer **dadurch gekennzeichnet ist, dass** sie eine Steuervorrichtung (26) umfasst, die dazu ausgelegt ist, das gewünschte Verhältnis zwischen der ersten Luftströmungsrate und der zweiten Luftströmungsrate einzustellen, um so eine gewünschte Temperatur des Gases am Einlass der Zweitstufen-Brennkammer (9) auf Basis der Art des ersten Brennstoffs und des zweiten Brennstoffs und auf Basis der Betriebsbedingungen der sequentiellen Brennkammeranordnung (3) zu erhalten.

2. Sequentielle Brennerkammeranordnung gemäß Anspruch 1, wobei die zweite Leitung (31) Luft in einen Mischer (11) liefert, der zwischen der Erststufen-Brennkammer (8) und der Zweitstufen-Brennkammer (9) angeordnet ist.

3. Sequentielle Brennerkammeranordnung gemäß Anspruch 1, wobei die zweite Leitung (31) Luft in eine Hochdruckturbine einspeist, die zwischen der Erststufen-Brennkammer (8) und der Zweitstufen-Brennkammer (9) angeordnet ist.

4. Sequentielle Brennerkammeranordnung gemäß einem der vorhergehenden Ansprüche, wobei die Einstellvorrichtung (33) ein erstes Regelventil (35) an der ersten Leitung (30) umfasst.

5. Sequentielle Brennerkammeranordnung gemäß einem der vorhergehenden Ansprüche, wobei die Einstellvorrichtung (33) ein zweites Regelventil (36) an der zweiten Leitung (31) umfasst.

6. Sequentielle Brennerkammeranordnung gemäß einem der Ansprüche 1 bis 3, wobei die Einstellvorrichtung (33) ein Drei-Wege-Ventil (37) umfasst, das dazu ausgelegt ist, die erste Luftströmungsrate in der ersten Leitung (30) und die zweite Luftströmungsrate in der zweiten Leitung (31) einzustellen.

7. Sequentielle Brennerkammeranordnung gemäß einem der Ansprüche 1 bis 3, wobei die Einstellvorrichtung (33) eine Umgehungsleitung (38) und ein Umgehungsventil (39) an der Umgehungsleitung (38) umfasst; wobei die Umgehungsleitung (38) parallel zur ersten Leitung (30) und/oder zur zweiten Leitung (31) angeordnet ist.

8. Gasturbinenanordnung, umfassend einen Verdichter (2), eine Turbine (5) und eine sequentielle Brennkammeranordnung (3) gemäß einem der vorhergehenden Ansprüche.

9. Verfahren zum Betreiben einer sequentiellen Brennkammeranordnung (3) für eine Gasturbinenanordnung, umfassend:
Bereitstellen einer sequentiellen Brennkammeranordnung (3), umfassend:
• eine Erststufen-Brennkammer (8), die mindestens einen ersten Brenner (20) umfasst;
• eine Zweitstufen-Brennkammer (9), die stromabwärts von der Erststufen-Brennkammer (8) angeordnet ist und mindestens einen zweiten Brenner (21) umfasst; wobei die Zweitstufen-Brennkammer (9) und die Erststufen-Brennkammer (8) so verbunden sind, dass die Zweitstufen-Brennkammer (9) durch das heiße Gas gespeist wird, das der Erststufen-Brennkammer (8) entströmt;
Liefern mindestens eines ersten Brennstoffs an den mindestens einen ersten Brenner (20), um so mindestens eine erste Flamme (22) zu erzeugen;
Liefern mindestens eines zweiten Brennstoffs an den mindestens einen zweiten Brenner (21), um so mindestens eine zweite Flamme (23) zu erzeugen;
Liefern einer ersten Luftströmungsrate an den mindestens einen ersten Brenner (20);
Liefern einer zweiten Luftströmungsrate stromabwärts von der mindestens einen ersten Flamme (22) und stromaufwärts von der Zweitstufen-Brennkammer (9);
Einstellen der ersten Luftströmungsrate und der zweiten Luftströmungsrate, um so das Verhältnis zwischen der ersten Luftströmungsrate und der zweiten Luftströmungsrate zu steuern und einen gewünschten Luftanteil zu erhalten; wobei das Verfahren **dadurch gekennzeichnet ist, dass** es ferner ein Einstellen des gewünschten Verhältnisses zwischen der ersten Luftströmungsrate und der zweiten Luftströmungsrate umfasst, um so eine gewünschte Temperatur des Gases am Einlass der Zweitstufen-Brennkammer (9) zu erhalten;
wobei das Einstellen auf Basis der Art des ersten Brennstoffs und des zweiten Brennstoffs und auf Basis der Betriebsbedingungen der sequentiellen Brennkammeranordnung (3) erfolgt.

10. Verfahren gemäß Anspruch 9, wobei der erste Brennstoff und der zweite Brennstoff hochreaktive Brennstoffe sind.

11. Verfahren gemäß Anspruch 9 oder 10, wobei der erste Brennstoff und der zweite Brennstoff niederreaktive Brennstoffe sind.

## Revendications

1. Ensemble de combustion séquentielle comprenant :
• une chambre de combustion à premier étage (8) comprenant au moins un premier brûleur (20) alimenté par au moins un premier combustible et configuré pour générer, en cours d'utilisation, au moins une première flamme (22) ;
• une chambre de combustion à deuxième étage (9) disposée en aval de la chambre de combustion de premier étage (8) et alimentée par les gaz chauds sortant de la chambre de combustion de premier étage (8) ; la chambre de combustion de deuxième étage (9) comprend au moins un deuxième brûleur (21) alimenté par au moins un deuxième combustible et configuré pour générer, en cours d'utilisation, une deuxième flamme (23) ;
• un circuit d'alimentation en air (25) comprenant :
- une première conduite (30) configurée pour alimenter en air l'au moins un premier brûleur (20) de la chambre de combustion de premier étage (8) ;
- une deuxième conduite (31) configurée pour fournir de l'air en aval d'au moins une première flamme (22) et en amont de la chambre de combustion de deuxième étage (9) ;
- un dispositif de réglage (33) configuré pour régler un premier débit d'air dans la première ligne (30) et un second débit d'air dans la seconde ligne (31) de manière à contrôler le rapport entre le premier débit d'air et le second débit d'air et à obtenir un rapport d'air désiré ;
la chambre de combustion étant **caractérisée par le fait qu'**elle comprend un dispositif de commande (26) configuré pour régler le rapport souhaité entre le premier débit d'air et le second débit d'air de manière à obtenir une température souhaitée du gaz à l'entrée de la chambre de combustion de deuxième étage (9) en fonction du type de premier combustible et de second combustible et en fonction des conditions de fonctionnement de l'ensemble de combustion séquentielle (3).

2. Chambre de combustion séquentielle selon la revendication 1,
dans laquelle la deuxième conduite (31) alimente en air un mélangeur (11) placé entre la chambre de combustion de premier étage (8) et la chambre de combustion de deuxième étage (9).

3. Chambre de combustion séquentielle selon la revendication 1, dans laquelle la deuxième conduite (31) alimente en air une turbine à haute pression disposée entre la chambre de combustion de premier étage (8) et la chambre de combustion de deuxième étage (9).

4. Chambre de combustion séquentielle selon l'une quelconque des revendications précédentes, dans laquelle le dispositif de réglage (33) comprend une première soupape de régulation (35) sur la première conduite (30).

5. Chambre de combustion séquentielle selon l'une quelconque des revendications précédentes, dans laquelle le dispositif de réglage (33) comprend une deuxième soupape de régulation (36) sur la deuxième conduite (31).

6. Combustion séquentielle selon l'une quelconque des revendications 1 à 3, dans laquelle le dispositif de réglage (33) comprend une vanne à trois voies (37) configurée pour régler le premier débit d'air dans la première conduite (30) et le deuxième débit d'air dans la deuxième conduite (31).

7. Chambre de combustion séquentielle selon l'une quelconque des revendications 1 à 3, dans laquelle le dispositif de réglage (33) comprend une conduite de dérivation (38) et une soupape de dérivation (39) sur la conduite de dérivation (38) ; la conduite de dérivation (38) étant disposée parallèlement à la première conduite (30) et/ou à la deuxième conduite (31).

8. Ensemble de turbine à gaz comprenant un compresseur (2), une turbine (5) et une chambre de combustion séquentielle (3) selon l'une quelconque des revendications précédentes.

9. Procédé de fonctionnement d'un ensemble de chambre de combustion séquentielle (3) pour un ensemble de turbine à gaz comprenant :
la fourniture d'un ensemble de chambre de combustion séquentielle (3) comprenant :
▪ une chambre de combustion de premier étage (8) comprenant au moins un premier brûleur (20) ;
▪ une chambre de combustion de deuxième étage (9) disposée en aval de la chambre de combustion de premier étage (8) et comprenant au moins un deuxième brûleur (21) ; la chambre de combustion de deuxième étage (9) et la chambre de combustion de premier étage (8) étant reliées de manière à ce que la chambre de combustion de deuxième étage (9) soit alimentée par les gaz chauds sortant de la chambre de combustion de premier étage (8) ;
la fourniture d'au moins un premier combustible au au moins un premier brûleur (20) de manière à générer au moins une première flamme (22) ;
la fourniture d'au moins un deuxième combustible au au moins un deuxième brûleur (21) de manière à générer au moins une deuxième flamme (23) ;
la fourniture d'un premier débit d'air à l'au moins un premier brûleur (20) ;
la fourniture d'un deuxième débit d'air en aval de l'au moins une première flamme (22) et en amont de la chambre de combustion de deuxième étage (9) ;
la régulation du premier débit d'air et du deuxième débit d'air de manière à contrôler le rapport entre le premier débit d'air et le deuxième débit d'air et à obtenir un rapport d'air souhaité ; le procédé étant **caractérisé par le fait qu'**il comprend en outre le réglage du rapport souhaité entre le premier débit d'air et le deuxième débit d'air de manière à obtenir une température souhaitée du gaz à l'entrée de la chambre de combustion de second étage (9) ; dans lequel le réglage est effectué sur la base du type de premier combustible et de deuxième combustible et sur la base des conditions de fonctionnement de l'ensemble de chambre de combustion séquentielle (3).

10. Procédé selon la revendication 9, dans lequel le premier combustible et le deuxième combustible sont des combustibles hautement réactifs.

11. Procédé selon la revendication 9 ou 10, dans lequel le premier combustible et le deuxième combustible sont des combustibles faiblement réactifs.
